**Europäisches Patentamt**

**European Patent Office**

**Office européen des brevets**

(19)

(11) Publication number: **0 149 536**
**A2**

(12) **EUROPEAN PATENT APPLICATION**

(21) Application number: **85300190.7**

(22) Date of filing: **11.01.85**

(51) Int. Cl.⁴: **H 04 N 7/00**

(30) Priority: **18.01.84 GB 8401318**

(43) Date of publication of application:
**24.07.85 Bulletin 85/30**

(84) Designated Contracting States:
**BE DE FR GB IT NL SE**

(71) Applicant: **COMMUNICATIONS PATENTS LIMITED
Carlton House Lower Regent Street P.O. Box 451
London, SW1Y 4LS(GB)**

(72) Inventor: **Baker, Henry Louis
54A Joel Street
Northwood Middlesex HA6 1PA(GB)**

(74) Representative: **Allman, Peter John et al,
WHEATLEY & MACKENZIE Scottish Life House Bridge
Street
Manchester M3 3DP(GB)**

(54) Communications system.

(57) A communications system comprising a head end, and a plurality of subscriber units each provided with a receiver for receiving transmitted programme signals. A digital signal representative of a message to be delivered to any one subscriber unit is transmitted from the head end. The transmitted digital signal is converted at the subscriber unit to an output signal which can be reproduced as an audible message by the subscriber unit, and the subscriber unit is selectively controlled to reproduce the audible message. The subscriber units may be terminals of a cable television system comprising a trunk cable network connecting the head end to a plurality of switching centres, and a number of subscriber cables connecting the subscriber units to the switching centres. Television signals are transmitted from the head end over a plurality of channels in the trunk network and switched to individual subscribers from the switching centres in response to control signals transmitted to the switching centres from individual subscribers. Signals are transmitted from the head end to control the switching centres such that a subscriber's receiver is selectively connected to the channel on which the digital signals are transmitted, whereby audible responses can be transmitted selectively to subscribers.

## COMMUNICATIONS SYSTEM

The present invention relates to a communications system.

Communications systems incorporating teletext facilities are now well known. In such systems a teletext signal is transmitted to a television receiver, the signals are stored in the receiver, and text representative of the stored signals is displayed by the receiver when it is switched to the teletext mode. In most cases the teletext signals are transmitted during otherwise unused times of a standard television signal transmission.

Most television receiver manufacturers have decided to provide teletext facilities on all the receivers they produce. It can therefore be assumed that most receivers entering service will have such facilities. There are many television receivers already in use however which do not have teletext facilities and this will remain the case for a prolonged period.

Cable television systems using conductive wires and/or optic fibres have been developed which offer sophisticated services that enable individual subscribers to interact with the system by transmitting data via the system and receiving data in response. One such system is described in our European Patent Specification No. 0 094 794. In the described system various services are available to subscribers which rely upon teletext signals to transmit information to individual subscribers. Unfortunately subscribers without teletext receivers will not be able to use these services and might be reluctant to purchase teletext equipment simply to gain access to these services.

There are also circumstances in which it is desirable to be able to broadcast information such as announcements to individuals not connected to a cable system or not provided with a television receiver at all. For example blind persons have no use for a television but could benefit from a communications system capable of delivering messages to them via a conventional radio receiver.

It is an object of the present invention to provide a communications system in which data can be transmitted to subscribers using teletext-type digital signals even if the subscribers do not have conventional teletext receivers.

According to the present invention, there is provided a communications system comprising a head end, a plurality of subscriber units each provided with a receiver for receiving transmitted programme signals, means at the head end for transmitting a digital signal representative of a message to be delivered to any one subscriber unit, means at each subscriber unit for converting a transmitted digital signal intended for that subscriber unit to an output signal which can be reproduced as an audible message by the subscriber unit, and means for selectively controlling the subscriber unit to reproduce the said output signal, whereby audible responses can be transmitted selectively to subscribers.

In its simplest form, the system can be used to deliver messages via a subscriber's radio receiver. All that is required for each subscriber unit is a wide band radio receiver for receiving the digital signal, a decoder for converting the digital signal to a form which can be reproduced as an audible message, and an audible signal producing device for reproducing the audible message.

The invention also has particular utility in cable television systems, and when applied to such systems may comprise a trunk cable network connecting the head end to a plurality of switching centres, and a plurality of subscriber cables connecting the subscriber units to the switching centres, signals transmitted from the head end over a plurality of channels in the trunk network being switched to individual subscriber units from the switching centres in response to control signals transmitted to the switching centres from individual subscribers, wherein means controllable from the head end are provided at the switching centres for selectively connecting the receiver of a subscriber unit to which a message is to be delivered to the channel on which the digital signals are transmitted, whereby audible messages can be transmitted selectively to subscribers.

The invention effectively enables a radio receiver or a non-teletext television receiver to be converted easily to receive audible response generated by teletext-type digital signals. The audible messages may be reproduced by for example the subscriber's receiver loudspeaker or a speech synthesizer.

Embodiments of the present invention will now be described, by way of example, with reference to the accompanying drawings, in which :

Fig. 1 illustrates an embodiment of the invention providing audible responses to subscribers to a television cable system via the loudspeakers of the subscribers television receivers; and

Fig. 2 illustrates an embodiment of the invention providing audible responses to subscribers to a television cable system via speech synthesizers.

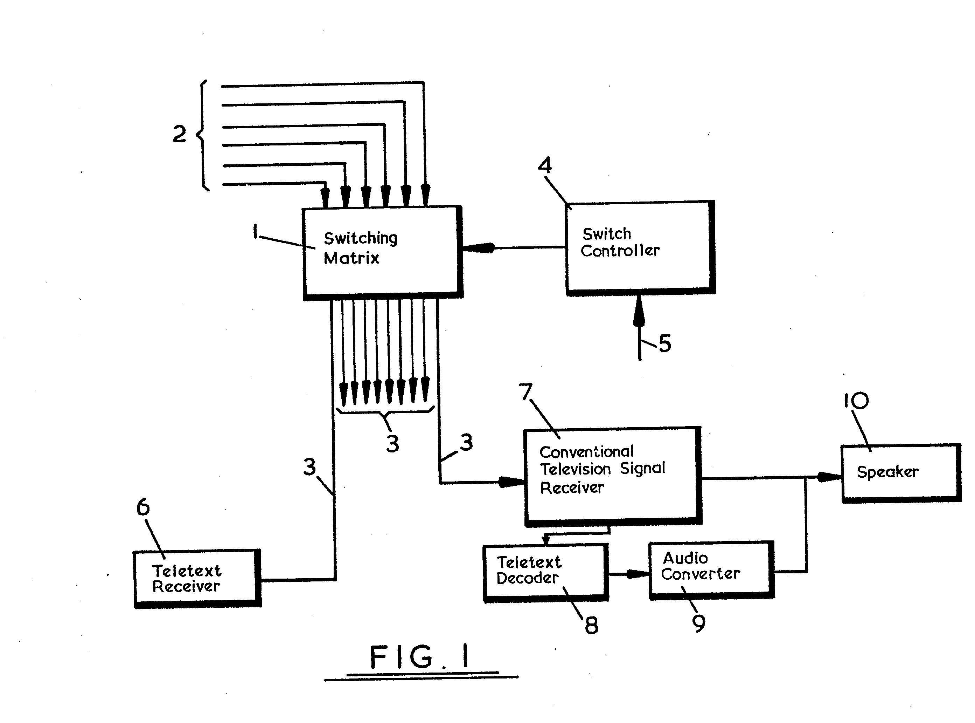

Referring to Fig. 1, a switching matrix 1 provided in a switching centre receives from a trunk cable network six television signal inputs 2, each input carrying five VHF signals distinguished by frequency. The switching matrix is connected to individual subscribers via subscriber cables 3 and is adapted to apply to respective cables 3 any one of the thirty signals input to the matrix. The switching matrix is responsive to a switch controller 4 that is itself controlled by an input 5. The control signals applied to input 5 may be generated in response to signals transmitted to the switching centre from individual subscribers or from the head end. Such signals may be generated in the manner described in the above European Patent Specification for example.

One of the thirty channels applied to inputs 2 carries a teletext signal encoded with response messages to be delivered to individual subscribers. One such message could be for example a bank statement requested by a subscriber. If the subscriber in question has a teletext receiver 6, the teletext signal can be switched straight to the receiver via the switching matrix 1 under the control of signals transmitted from the head end, the subscriber's receiver being switched to the teletext mode. If the subscriber has a conventional receiver 7, teletext signals cannot be received and it is necessary to provide a converter if the subscriber is to receive responses.

In the embodiment of Fig. 1, the converter comprises a teletext decoder 8 consisting of a standard set of integrated circuits of the kind used to adapt a conventional receiver for teletext reception. The decoder 8 feeds an audio converter 9 which converts the digital output of the decoder 8 into an audio signal that is applied to the receiver loudspeaker 10. Thus, when it is desired to transmit a response to a subscriber having a conventional receiver and a converter, the normal teletext signal is replaced at the head end by a teletext-type signal in which an audible response is coded into a digital signal suitable for driving the audio converter 9. Audible responses can thus be transmitted to those subscribers not having teletext receivers by providing such subscribers with simple and economic converters.

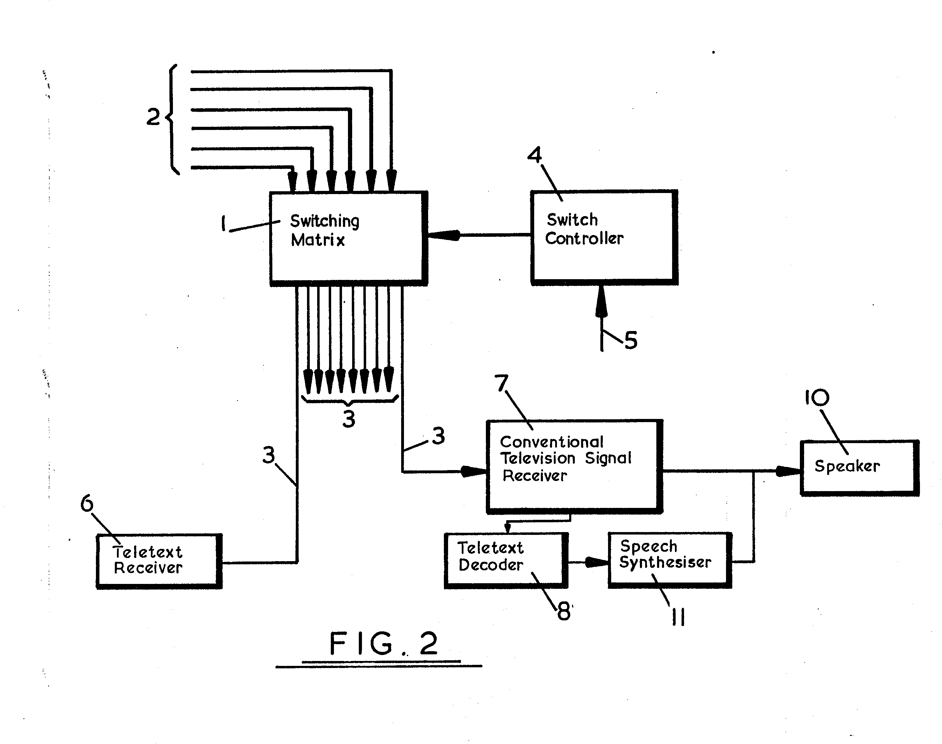

Fig. 2 shows an arrangement similar to that of Fig. 1. In Fig. 2, the audio converter 9 of Fig. 1 has been replaced by a simple speech synthesizer 11. The digital signal generated at the head end is of course suitable for driving the synthesizer.

It will be appreciated that the term "cable" as used herein is intended to cover conductive transmission lines, optic fibres and combinations of the two.

The above description assumes a knowledge of conventional teletext systems. Such knowledge can be obtained by reference to the following publications, the contents of which are incorporated herein by reference:

Recommendations and Reports of the C.C.I.R. 1982, Vol. XI, Part 1, Report No. 957.

Electronics, Vol. 26, No. 3, August 1980, pages 527 to 554 "Enhanced U.K. Teletext-Moves towards still pictures" by J.P. Chambers, IEEE Transactions on Consumer Electronics.

Proc. IEE, Special Issue on Teletext and Viewdata, Electronics Record, Dec. 1979, pages 1417-1424 "Teletext and Viewdata Systems and their possible extension to the U.S.A.", by G.D. Crowther and D.S. Hobbs.

0149536

- 6 -

CLAIMS:

1. A communications system comprising a head end, a plurality of subscriber units each provided with a receiver for receiving transmitted programme signals, means at the head end for transmitting a digital signal representative of a message to be delivered to any one subscriber unit, means at each subscriber unit for converting a transmitted digital signal intended for that subscriber unit to an output signal which can be reproduced as an audible message by the subscriber unit, and means for selectively controlling the subscriber unit to reproduce the said output signal, whereby audible responses can be transmitted selectively to subscribers.

2. A communications system according to claim 1, comprising a trunk cable network connecting the head end to a plurality of switching centres, and a plurality of subscriber cables connecting the subscriber units to the switching centres, signals transmitted from the head end over a plurality of channels in the trunk network being switched to individual subscriber units from the switching centres in response to control signals transmitted to the switching centres from individual subscribers, wherein means controllable from the head end are provided at the switching centres for selectively connecting the receiver of a subscriber unit to which a message is to be delivered to the channel on which the digital signals are transmitted, whereby audible messages can be transmitted selectively to subscribers.

3. A communications system according to claim 2, wherein the digital signals are transmitted as teletext and means are provided at the head end for applying teletext signals to that channel, the system further comprising means located at the head end for converting an audio response message into a teletext-type signal forming said digital signal, and means located at the head end for substituting the digital signal for the teletext signal normally transmitted over the said channel and simultaneously transmitting controlling signals to the switching centres to control the connection of the receiver of the or each intended recipient of the message to the said channel, the converting means comprising a teletext decoder for extracting the transmitted digital signal, and an audio signal generator for converting the decoder output to an audio signal which is applied to the receiver loudspeaker.

4. A communications system according to claim 2, wherein the channel on which the digital signals are transmitted is a teletext channel and means are provided at the head end for applying teletext signals to that channel, the system further comprising means located at the head end for encoding an audio response message as a set of digital instructions suitable for controlling the operation of a speech synthesizer, the digital instructions forming said digital signal, and means located at the head end for substituting the digital signal for the teletext signal normally transmitted over the said channel and simultaneously transmitting controlling signals to the switching centres to control the connection of the receiver of the or each intended recipient of the message to the said channel, the converting means comprising teletext acquisition and storage devices for extracting the transmitted digital signal, and a speech synthesizer responsive to the stored digital signal.

0149536

Switch Controller

4

5

Switching Matrix

1

2

3

3

3

Teletext Receiver

6

Conventional Television Signal Receiver

7

Speaker

10

Audio Converter

9

Teletext Decoder

8

FIG. 1

FIG. 2

2 / 2

0149536